Europäisches Patentamt

European Patent Office

Office européen des brevets

(19)

(11) Veröffentlichungsnummer: **0 123 076**
**B1**

(12) **EUROPÄISCHE PATENTSCHRIFT**

(45) Veröffentlichungstag der Patentschrift:
07.01.87

(21) Anmeldenummer: **84102396.3**

(22) Anmeldetag: **06.03.84**

(51) Int. Cl.⁴: **B 23 D  21/14, F 22 B  37/00**

(54) Einrichtung zum Zertrennen eines Rohres aus einem in einem Rohrboden endenden Bündel.

(30) Priorität: **22.03.83  DE 3310387**

(43) Veröffentlichungstag der Anmeldung:
**31.10.84 Patentblatt 84/44**

(45) Bekanntmachung des Hinweises auf die Patenterteilung:
**07.01.87 Patentblatt 87/2**

(84) Benannte Vertragsstaaten:
**BE CH DE FR LI NL SE**

(56) Entgegenhaltungen:
**EP - A - 0 023 820**
**DE - A - 3 104 859**
**DE - C - 1 136 956**
**DE - C - 2 263 143**
**US - A - 2 840 902**
**US - A - 4 142 429**

(73) Patentinhaber: **KRAFTWERK UNION
AKTIENGESELLSCHAFT, Wiesenstrasse 35,
D-4330 Mülheim (Ruhr) (DE)**

(72) Erfinder: **Brehm, Rudolf, Hotschet-Siedlung 7,
D-8551 Hausen (DE)**
Erfinder: **Weigl, Heribert, Waldstrasse 3,
D-8524 Neunkirchen am Brand (DE)**

(74) Vertreter: **Mehl, Ernst, Dipl.-Ing. et al, Postfach 22 01 76,
D-8000 München 22 (DE)**

ACTORUM AG

**Beschreibung**

Die Erfindung betrifft eine Einrichtung zum Zertrennen eines Rohres in einem Rohrboden mit einer Hohlwelle mit einer zu dem Rohr parallelen Achse, die eine exzentrische Bohrung aufweist, wobei in der Bohrung ein Rohr mit einem exzentrischen zylindrischen Innenraum gelagert ist, in dem eine Antriebswelle gelagert ist, die an dem dem Rohrboden zugekehrten Ende des Rohres ausserhalb desselben ein Schneidwerkzeug trägt und an dem dem Rohrboden abgekehrten Ende des Rohres mit einem Antrieb versehen ist, und wobei die Hohlwelle und das Rohr um 180° gegeneinander verdrehbar sind.

Die aus der US-PS 2 840 902 bekannte Einrichtung der oben genannten Art ist für den Handbetrieb vor Ort eingerichtet, denn die Exzenterverstellung des Schneidwerkzeuges erfolgt mit einem Handgriff und selbst der Antriebsmotor für das Schneidwerkzeug wird mit einem Drücker betätigt, der wie der Abzugshahn einer Pistole an einem Pistolengriff sitzt.

Bei der Reparatur von Dampferzeugern für Kernkraftwerke kommt es jedoch bekanntlich darauf an, den Personaleinsatz vor Ort im Hinblick auf die Strahlungsbelastung so gering wie möglich zu halten. Deshalb ist die Aufgabe der Erfindung eine solche Ausbildung der oben genannten Einrichtung, dass sie mit Fernbedienung gesteuert und betrieben werden kann.

Aus der DE-PS 22 63 143 ist zwar eine Inspektions- und Reparatureinrichtung für Dampferzeuger in Kernkraftwerken bekannt, die fernbedient verschiedene Mess- und Reparatureinrichtungen sowie Werkzeuge in die Rohre des Dampferzeugers eines Druckwasserreaktors zu führen gestattet. Die Werkzeuge werden dabei nur in Längsrichtung der Rohre bewegt.

Bei einer aus der DE-OS 31 04 859 bekannten Einrichtung zur Bergung von Proben aus festen Ablagerungen in Dampferzeugern werden zwar Fräsmesser eines Fräskopfes, der am freien Ende einer als Hohlwelle ausgebildeten Frässpindel sitzt, fernbedient in radialer Richtung verstellt. Dazu dient jedoch ein mit einem Bowdenzug axial verstellter Stössel, der über einen Winkelhebel in einer am Rohrboden befestigten Montageplatte betätigt wird. Die Keilwirkung des Stössels erfordert aber einen symmetrischen Kraftfluss und ist deshalb für exzentrische Anordnungen nicht gut geeignet.

Zur Lösung der vorgenannten Aufgabe ist die Einrichtung erfindungsgemäss so ausgebildet, dass zur Reparatur von Dampferzeugern in Kernkraftwerken, die ein in dem Rohrboden endendes Bündel paralleler geradliniger Rohre aufweisen, die Hohlwelle in einer Platte drehbar gelagert ist, die zur Befestigung an dem Rohrboden mit Spreizdornen in die Rohre greift, dass die Hohlwelle und das Rohr über ein Zahnradpaar mit einem Ritzel miteinander gekoppelt sind, das mehrfach kleiner als das zugehörige Gegenrad ist und dessen Antrieb ferngesteuert ist, und dass die Hohlwelle auf der dem Rohrboden abgekehrten Seite der Platte mit einem Flansch versehen ist, an dem ein an der Platte befestigter Motor zur Drehung der Hohlwelle angreift.

Bei der neuen Einrichtung ist die mit der doppelt exzentrischen Lagerung der Antriebswelle des Schneidwerkzeuges definierte stufenlose Verstellung der Schneidtiefe mit Fernbedienung möglich, denn die am Rohrboden mit Spreizdornen zu befestigende Platte sorgt für eine auch durch Fernbedienung mögliche Anbringung und zugleich für die fernbediente Betätigung der Verstellmöglichkeiten wie auch der Schneidbewegung. Mithin erfüllt die vorstehend definierte neue Einrichtung in günstigster Weise die vorstehend genannten Anforderungen.

Besonders vorteilhaft ist es, wenn der Flansch mit der Hohlwelle durch eine lösbare Klemmverbindung gekoppelt ist. Mit dieser Klemmverbindung lässt sich stufenlos die Eindringtiefe der Hohlwelle in das Rohr und damit der Abstand der Trennstelle des Rohres vom Rohrboden einstellen.

Vorzugsweise weist die Platte der neuen Einrichtung auf der dem Rohrboden abgekehrten Seite fernbedienbare Spreizdorne zur Anbringung am Rohrboden auf, die in Rohre im Rohrboden eingreifen. Solche Spreizdorne sind an sich bekannt.

Zur näheren Erläuterung der Erfindung wird anhand der beiliegenden Zeichnung ein Ausführungsbeispiel beschrieben. Dabei zeigt die Fig. 1 in einem Vertikalschnitt den unteren Teil eines Dampferzeugers für einen Druckwasserreaktor, die Fig. 2 zeigt in einem grösseren Vertikalschnitt die neue Einrichtung in einer Stellung des Exzenters, während die Fig. 3 in einer anderen Stellung einen Ausschnitt der Einrichtung zeigt. In den Fig. 4 und 5 sind zwei zugehörige Querschnitte gezeichnet, während die Fig. 6 in einem anderen Querschnitt den dem Rohrboden abgekehrten Teil der Einrichtung darstellt.

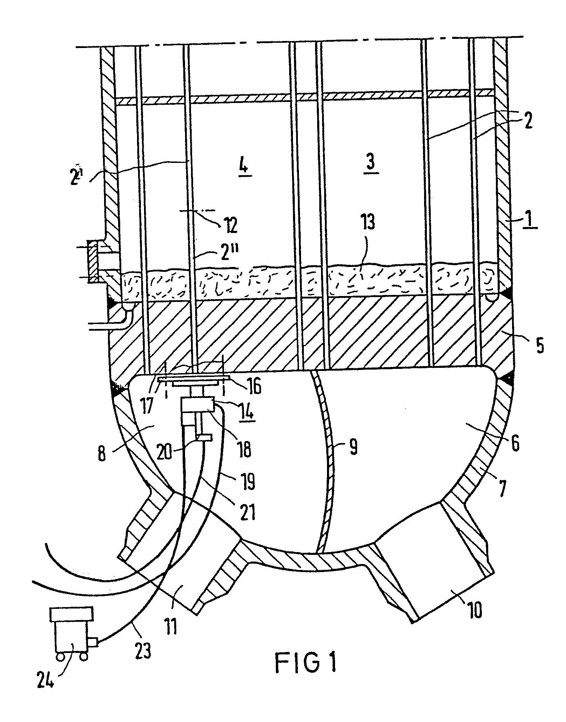

In Fig. 1 ist der zu bearbeitende Dampferzeuger als Ganzes mit 1 bezeichnet. Es handelt sich um einen U-Rohrdampferzeuger, dessen Bündel paralleler Rohre 2 zwei Schenkel 3 und 4 bildet, die in dem Rohrboden 5 so enden, dass der eine Schenkel 3 der einen Hälfte 6 einer durch den Boden 7 begrenzten Primärkammer und der andere Schenkel 4 dem anderen Teil 8 der Primärkammer zugeordnet ist. Die beiden Hälften 6, 8 sind durch eine Trennwand 9 voneinander abgegrenzt und über als Mannlöcher dienende Rohrstutzen 10 und 11 zugänglich.

Die Rohre 2 bestehen aus Incaloy 800 und haben bei einem Aussendurchmesser von 22 mm eine Wandstärke von 1,2 mm.

Auf der linken Seite der Fig. 1 ist dargestellt, dass das Heizrohr 2' durch einen Schnitt an der Trennstelle 12 aufgetrennt werden soll, um den in der Fig. 1 unteren Teil 2'' ersetzen zu können, der durch Korrosionserscheinungen in der dem Rohrboden 5 benachbarten, durch Korrosion besonders gefährdeten Schicht 13 angegriffen ist. Zu diesem Zweck wird die als Ganzes mit 14 bezeichnete Einrichtung nach der Erfindung in die Kammer 8 eingebracht.

Die Einrichtung 14 umfasst, wie die Fig. 1 erkennen lässt, eine Montageplatte 16, die mit gestrichelt angedeuteten Befestigungsmitteln 17 am Rohrboden 5 angebracht ist. Die Befestigungsmittel sind Spreizdorne, die in die die Rohre 2 aufnehmenden Bohrungen des Rohrbodens 5 greifen. An der Platte 16 sitzt ein erster Antriebsmotor 18, der über eine Versorgungsleitung 19 gespeist wird, und ein zweiter Antriebsmotor 20 mit einer Versorgungsleitung 21. Eine Steuerungsleitung 23 führt zu einem neben dem Dampferzeuger stehenden Steuerpult 24.

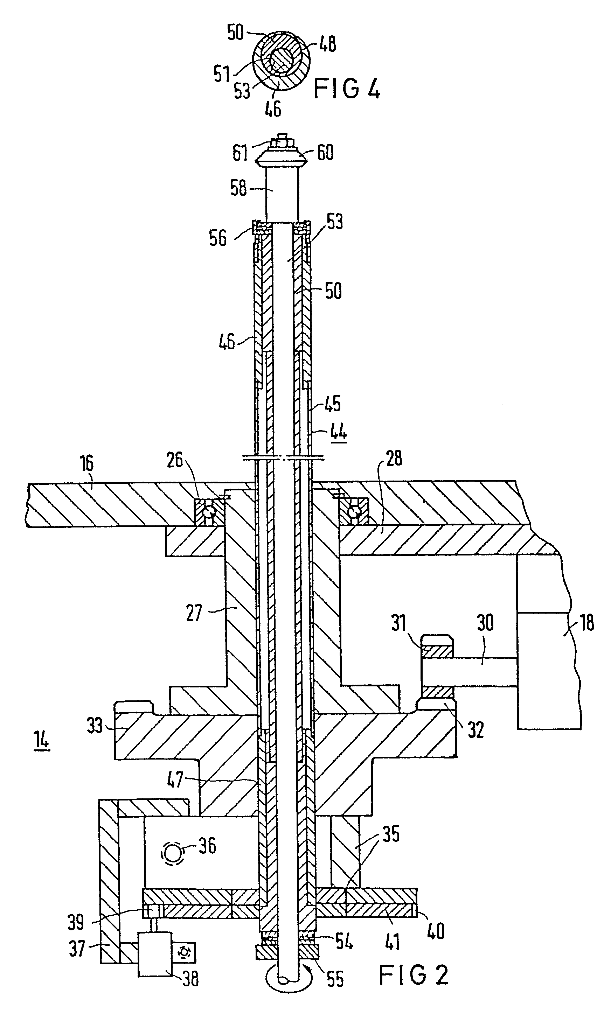

In Fig. 2 ist zu sehen, dass in der Montageplatte 16 mit einem Kugellager 26 eine Manschette 27 gelagert ist. Das Kugellager 26 ist mit einer Motorhalteplatte 28 festgelegt, an der der Antriebsmotor 18 angeflanscht ist. Der Motor 18 trägt auf seiner Welle 30 ein Ritzel 31, das in einem in einer horizontalen Ebene liegenden Zahnring 32 am äusseren Rand eines Flanschkörpers 33 angreift. Mit dem Flanschkörper ist eine Klemmschelle 35 verbunden, die mit einer Schraubverbindung 36 zu schliessen oder zu lösen ist. An der Klemmschelle 35 ist ein Haltebügel 37 angeschraubt, der den Antriebsmotor 38 für ein Ritzel 39 trägt. Das Ritzel 39 kämmt mit einer Verzahnung 40 am Umfang einer Schwenkscheibe 41, so dass eine Verstellung zwischen der Schwenkscheibe 41 und der Klemmschelle 35 bewirkt werden kann.

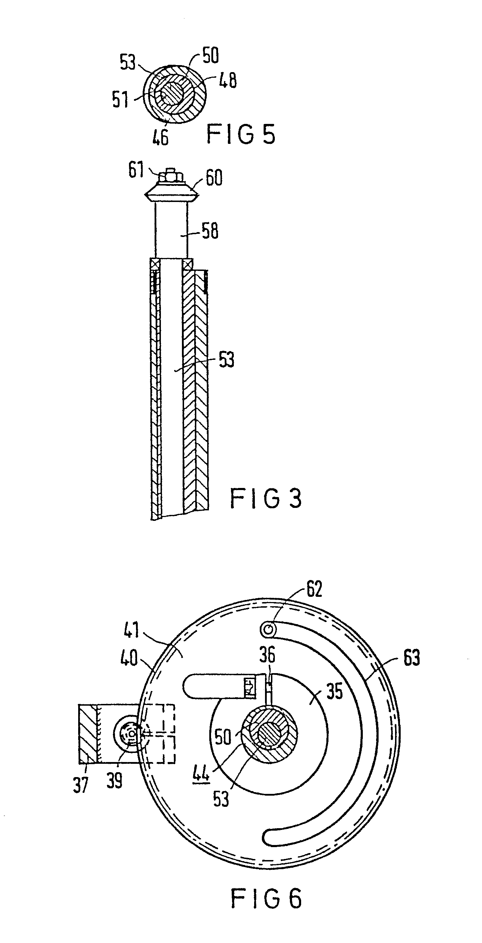

In der Manschette 27 ist mit der Klemmschelle 35 eine Hohlwelle 44 festgelegt, die ein zylindrisches Rohr 45 mit Endstücken 46 am oberen und 47 am unteren Ende umfasst. Die Endstücke 46 und 47 haben übereinstimmend eine exzentrische Bohrung 48, wie in den Fig. 3 bis 6 zu erkennen ist. In dieser ist ein Rohr 50 drehbar gelagert, das ebenfalls exzentrisch ist, weil sein Innenraum 51 gegenüber der Bohrung 48 um 1,25 mm exzentrisch liegt. In diesem Innenraum 51 ist eine Antriebswelle 53 drehbar gelagert, die dem in Fig. 1 sichtbaren Antriebsmotor 20 zugeordnet ist. Die Lagerung der Antriebswelle umfasst ein unteres, mit Kugeln versehenes Drucklager 54, das mit einem Stellring 55 befestigt ist, sowie ein oberes Kugellager 56, auf dem der Bund einer Verdickung 58 aufsitzt, die aus dem Endstück 46 hinausragt. Auf der Verdickung 58 sitzt ein austauschbarer Prismenfräser 60, der zum Beispiel mit einer Mutter 61 befestigt ist.

Fig. 6 zeigt, dass durch einen Stift 62, der an der Schwenkscheibe 41 befestigt ist und in eine sich über 180° erstreckende Ringnut 63 in der Klemmschelle 35 erstreckt, die Relativbewegung zwischen der exzentrischen Bohrung 48 und dem Rohr 50 auf 180° begrenzt ist. Damit ergibt sich eine maximale Auslenkung von 2×1,25=2,5 mm, um die das Schneidwerkzeug 60 gegenüber der Achse der Hohlwelle 44 verstellt werden kann. Mit dieser Bewegung ist es möglich, mit definierter Schneidtiefe durch eine Drehung der Antriebswelle 53 die Rohre 2 des Dampferzeugers 1 an einer Stelle zu zerlegen, die durch die Eindringtiefe in die Rohre 2 bestimmt ist. Diese Eindringtiefe kann wiederum leicht dadurch variiert werden, dass nach dem Lösen der Klemmschelle 35 die die Antriebswelle 53 und das Rohr 50 aufnehmende Hohlwelle 44 in der Manschette auf eine geeignete Länge gegenüber der Platte 16 und damit dem Rohrboden 5 verstellt wird.

## Patentansprüche

1. Einrichtung zum Zertrennen eines Rohres (2) in einem Rohrboden (5) mit einer Hohlwelle (44) mit einer zu dem Rohr (2) parallelen Achse, die eine exzentrische Bohrung (48) aufweist, wobei in der Bohrung (48) ein Rohr (50) mit einem exzentrischen zylindrischen Innenraum (51) gelagert ist, in dem eine Antriebswelle (53) gelagert ist, die an dem dem Rohrboden (5) zugekehrten Ende des Rohres (50) ausserhalb desselben ein Schneidwerkzeug (60) trägt und an dem dem Rohrboden (5) abgekehrten Ende des Rohres (50) mit einem Antrieb zu versehen ist, und wobei die Hohlwelle (44) und das Rohr (50) um 180° gegeneinander verdrehbar sind, dadurch gekennzeichnet, dass zur Reparatur von Dampferzeugern (1) in Kernkraftwerken, die ein in dem Rohrboden (5) endendes Bündel paralleler geradliniger Rohre (2) aufweisen, die Hohlwelle (44) in einer Platte (16) drehbar gelagert ist, die zur Befestigung an dem Rohrboden (5) mit Spreizdornen (17) in die Rohre (2) greift, dass die Hohlwelle (44) und das Rohr (50) über ein Zahnradpaar mit einem Ritzel (39) miteinander gekoppelt sind, das mehrfach kleiner als das zugehörige Gegenrad (41) ist und dessen Antrieb ferngesteuert ist, und dass die Hohlwelle (44) auf der dem Rohrboden (5) abgekehrten Seite der Platte (16) mit einem Flansch (33) versehen ist, an dem ein an der Platte (16) befestigter Motor (18) zur Drehung der Hohlwelle (44) angreift.

2. Einrichtung nach Anspruch 1, dadurch gekennzeichnet, dass der Flansch (33) mit der Hohlwelle (44) durch eine lösbare Klemmverbindung (35, 36) gekoppelt ist.

3. Einrichtung nach Anspruch 1 oder 2, dadurch gekennzeichnet, dass die Spreizdorne (17) zur Befestigung an den Rohren (2) fernbedienbar sind.

## Claims

1. A device for severing a tube (2) in a tube plate (5) comprising a hollow shaft (44) with an axis which is parallel to the tube (2) and having an eccentric bore (48), where in the bore (48) a tube (50) is positioned which has an eccentric cylindrical inner space (51) in which a driving shaft (53) is mounted which, at the end of the tube (50) which faces the tube plate (5), carries a cutting tool (60) outside said tube and at the end of the tube (50) facing away from the tube plate (5) is provided with a drive, and where the hollow shaft (44) and the tube (50) can be rotated with respect to one another through 180°, characterised in that, in order to repair steam generators (1) in nuclear power stations which have a bundle of parallel rectilinear tubes (2) which terminates in the tube plate (5), the hollow shaft (44) is rotatably mounted in a plate (16) which for securing to the tube plate (5) grips within the tubes (2) by means of expanding mandrels (17); that the hollow shaft (44) and the tube (50) are coupled to one another by means of a gear wheel pair having a pinion (39) which is many times smaller than the contra-wheel (41) assigned thereto and whose movement is remotely controlled; and that on the side of the plate (16) remote from the tube plate (5), the hollow shaft (44) is provided with a flange (33), on which acts a motor (18) which is secured to the sheet (16) and serves for rotating the hollow shaft (44).

2. A device as claimed in Claim 1, characterised in that the flange (33) is connected to the hollow shaft (44) by means of a releasable clamping connection (35, 36).

3. A device as claimed in Claim 1 or 2, characterised in that the expanding mandrels (17) for the purpose of fastening to the tubes (2) can be remotely controlled.

**Revendications**

1. Dispositif pour sectionner un tube (2) monté dans une plaque porte-tubes (5), comportant un arbre creux (44), qui possède un axe parallèle au tube (2) et possède un perçage excentré (48), et dans lequel dans le perçage (48) se trouve monté un tube (50) comportant un espace intérieur cylindrique excentré (51), dans lequel est monté un arbre d'entraînement (53) qui porte un outil de coupe (60) au niveau de l'extrémité du tube (50), tournée vers la plaque porte-tubes (5), et en dehors de ce tube, et doit être équipé d'un dispositif d'entraînement au niveau de l'extrémité du tube (50), tournée à l'opposé de la plaque porte-tubes (5), et dans lequel l'arbre creux (44) et le tube (5) peuvent pivoter de 180° l'un par rapport à l'autre, caractérisé par le fait que pour la réparation de générateurs de vapeur (1) dans des centrales nucléaires qui comportent un faisceau, se terminant dans une plaque porte-tubes (5), de tubes rectilignes parallèles (2), l'arbre creux (44) est monté de façon à pouvoir tourner dans une plaque (16), qui, pour la fixation sur la plaque porte-tubes (5), s'engage au moyen de broches d'écartement (17) dans les tubes (2), que l'arbre creux (44) et le tube (5) sont accouplés entre eux par l'intermédiaire d'un couple de roues dentées comportant un pignon (39), qui est plus petit, d'un multiple, que la roue antagoniste associée (41) et dont l'entraînement est télécommandé, et que l'arbre creux (44) comporte, sur la face de la plaque (16) tournée à l'opposé de la plaque porte-tubes (5), une bride (33) qui est attaquée par un moteur (18) fixé sur la plaque (16) et servant à faire tourner l'arbre creux (44).

2. Dispositif suivant la revendication 1, caractérisé par le fait que la bride (33) est accouplée à l'arbre creux (44) au moyen d'un dispositif de liaison détachable de serrage (35, 36).

3. Dispositif suivant la revendication 1 ou 2, caractérisé par le fait que les broches d'écartement (17) peuvent être télécommandées pour la fixation sur les tubes (2).

FIG 1

FIG 4

FIG 2

FIG 5

FIG 3

FIG 6